(19) Europäisches Patentamt
European Patent Office
Office européen des brevets

(11) Publication number: **0 172 154**
**B1**

(12) **EUROPEAN PATENT SPECIFICATION**

(45) Date of publication of patent specification: **14.11.90**

(51) Int. Cl.$^5$: **C 02 F 5/10,** C 02 F 5/12

(21) Application number: **85870097.4**

(22) Date of filing: **12.07.85**

# (54) Inhibition of scale formation with a maleate polymer.

(30) Priority: **13.07.84 US 630789**

(43) Date of publication of application:
**19.02.86 Bulletin 86/08**

(45) Publication of the grant of the patent:
**14.11.90 Bulletin 90/46**

(84) Designated Contracting States:
**DE FR GB IT**

(56) References cited:
**EP-A-0 123 108**
**GB-A-1 133 382**
**US-A-3 650 970**
**US-A-3 900 338**
**US-A-3 929 635**
**US-A-4 253 968**

**The file contains technical information submitted after the application was filed and not included in this specification**

(73) Proprietor: **Monsanto Company**
**Patent Department 800 North Lindbergh Boulevard**
**St. Louis Missouri 63167-7020 (US)**

(72) Inventor: **Coleman, James Patrick**
**2374 Wescreek Drive**
**Maryland Heights Missouri 63043 (US)**
Inventor: **Kvakovszky, George**
**1970 Greenpoint Drive**
**Kirkwood Missouri 63122 (US)**
Inventor: **Sikora, David John**
**139 Timka Drive**
**Ballwin Missouri 63011 (US)**

(74) Representative: **McLean, Peter et al**
**Monsanto Europe S.A. Patent Department**
**Avenue de Tervuren 270-272 Letter Box No 1**
**B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 172 154 B1**

**Description**

Field of the Invention

This invention relates to a method for inhibiting the formation and deposition of scale particularly calcium scale, and more particularly calcium phosphate scale in alkaline aqueous media.

Background of the Invention

The method of this invention has general applicability to any alkaline aqueous system where the formation and deposition of scale is a potential problem. It is particularly useful in inhibiting the formation and deposition of calcium orthophosphate scale. The most common systems in which scale formation can be a problem are in cooling water and boiling water systems. For the sake of simplicity, this invention will be discussed as it concerns cooling water systems.

A cooling water system is any system in which water is passed through a heat exchanger to provide cooling. A common system is a circulating system in which a cooling tower, spray pond, evaporative condenser, and the like serve to dissipate heat through evaporation of a portion of the cooling water. One result of this type of system is that the dissolved solids and suspended solids in the water become concentrated. The term employed in the art to indicate the degree of concentration of the circulating water as compared with the make-up water that is added to the system to replace water that has evaporated is "cycles of concentration". For example, two cycles of concentration indicates that the circulating water contains twice the concentration of dissolved and suspended solids as the make-up water.

Deposits in lines, heat exchange equipment, etc. may originate from several causes. Contaminant particles or substances may enter the system, where they may act as foulants which may agglomerate on surfaces. Corrosion of the system may occur resulting in deposition of the corrosion products on surfaces within the system. Additionally, deposits may form as a result of crystallization or precipitation of salts from the solution. These crystallized or precipitated salts are referred to as "scale" and the process is referred to as "scale formation".

Many factors affect the rate and quantity of scale formation. Some of these factors are as follows, temperature, rate of heat transfer, pH of the water, and the character and amount of dissolved solids in the water.

Although the discussion above is centered primarily on cooling water systems, the same considerations also apply to boiler water systems, and many other aqueous systems. Any aqueous system having calcium or magnesium cations or other positive hardness ions, and phosphate, carbonate, sulfate, or other suitable anions can experience formation and deposition of scale.

Circulating water systems have been operated under acidic conditions because of increased solubility of scale forming salts under acidic pH. Corrosion inhibition under these conditions in most instances involved solutions of chromate compounds. Chromate compounds have come under tight control as a result of limitations on pollutant discharge and other environmental concerns. As a result, the operating conditions for most cooling water systems had to be modified to accommodate new corrosion inhibitors. Cooling water systems are now most commonly run at relatively high pH. Many current corrosion inhibition systems involve the use of phosphates or phosphonates. The change to higher pH in cooling water systems has greatly increased the possibility of precipitation of scale forming salts. Additionally, the use of phosphates as corrosion inhibitors has greatly increased the possibility of formation of calcium phosphate scale, particularly calcium orthophosphate scale. Calcium orthophosphate is highly insoluble and inhibition of calcium orthophosphate scale has proven to be very difficult.

In addition to encrustation and heat transfer problems associated with scale formation, formation of calcium phosphate scale also removes phosphate from solution, reducing its effectiveness as a corrosion inhibitor. Inhibition of formation of calcium orthophosphate scale allows a higher concentration of phosphate in solution resulting in better corrosion inhibition. In this way, a calcium phosphate scale inhibitor can also be thought of as enhancing corrosion inhibition.

Even if phosphates are not added for corrosion inhibition, formation of calcium phosphate scale can be a problem. Phosphates can also be present in the water from a number of other sources. The supply water may contain phosphates from fertilizer runoff, sewage treatment, photochemical or oxidative degradation of phosphonates, natural sources, and other sources.

Calcium carbonate and calcium sulfate scale have also become larger problems as the pH of cooling water has been increased. Calcium carbonate and calcium sulfate are both soluble in an acidic solution, but are relatively insoluble at the higher pH's currently used in circulating water systems.

Of the polymers useful for scale inhibition, only a very small proportion are effective for inhibition of calcium orthophosphate scale. In view of the above, inhibition of scale formation, particularly inhibition of calcium phosphate scale, is becoming a larger, more difficult problem.

U.S. Patent 4,029,577, to Godlewski, et al discloses a class of polymers that are said to be effective at inhibiting formation of calcium orthophosphate scale. These polymers are copolymers of either acrylic acid or derivatives of acrylic acid with hydroxy lower alkyl acrylates. U.S. Patent 4,326,980, which issued April 27, 1982 to Snyder, et al, discloses a composition which is said to be effective for inhibiting calcium orthophosphate scale. This composition is a mixture of the copolymer of the Godlewski patent and a water soluble alkyl phenoxy polyethoxyethanol.

U.S. Patent 4,432,884 to Kawasaki, et al. discloses a class of polymers that are said to be effective at inhibiting formation of calcium phosphate scale. These polymers are copolymers of specified alkylolamides with specified alkenyl compounds. Both the alkylolamides and the alkenyl compounds are actually derivatives of acrylic acid.

U.S. Patent 4,435,556 to Masler discloses a class of terpolymers that are said to be effective at inhibiting formation of calcium phosphate scale. The terpolymer consists essentially of the two monomers of Godlewski along with a lower alkyl polyalkoxylated acrylate or methacrylate.

U.S. Patent 4,253,968 relates to the use of copolymers of maleic anhydride with allyl derivatives as calcium phosphate scale inhibitors under acidic conditions.

Each of the polymers of these references is, broadly speaking, an acrylate polymer. The identification of scale inhibitors that are effective at high pH's that are currently used, and particularly those that are effective against calcium orthophosphate scale, would be an advancement in the art.

## Summary of the Invention

This invention relates to a method for inhibiting precipitation of calcium phosphate and more particularly calcium orthophosphate, in an alkaline aqueous system, which comprises adding to the aqueous system a water soluble maleate polymer that comprises either of the repeating structural moieties A and B defined below.

Moiety A is defined as:

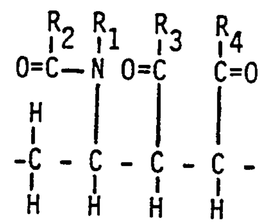

where $R_1$ and $R_2$ are the same or different and are alkyl groups, or $R_1$ and $R_2$ join together to form a lactam ring, and where $R_3$ and $R_4$ are individually such as to form with the adjacent carbonyl group a free acid or a water soluble salt of a free acid such as a sodium, potassium or ammonium salt, or $R_3$ and $R_4$ together are oxygen to form an acid anhydride. These polymers could, broadly speaking, be called copolymers of maleic anhydride and N-alkyl-N-vinylamides, with some of them being copolymers of maleic anhydride and N-vinyl-lactams.

Moiety B is defined as:

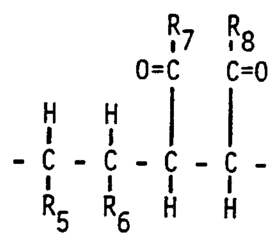

(a) where one of $R_7$ and $R_8$ is such as to form with the adjacent carbonyl group either a free acid or a water soluble salt of a free acid, such as a sodium, potassium or ammonium salt, and the other of $R_7$ and $R_8$ is such as form with the adjacent carbonyl group an ester of a polyol, a lower poly(alkylene oxide), a lower alkyl ether of a polyol or poly(alkylene oxide), an alcohol amine, or methanol; and (b) where $R_5$ and $R_6$ are individually either H or a group that does not render the polymer ineffective for inhibiting the precipitation of calcium phosphate from aqueous media. Broadly speaking, this subclass of polymers can be thought of as half esters of maleic anhydride polymers.

These copolymers are effective at inhibiting the precipitation of scale forming calcium phosphate, particularly of calcium orthophosphate. They are also effective as dispersants and antifoulants.

## Description of the Invention

The polymers useful with the invention are maleate polymers and copolymers. This means that they are produced from maleic acid or, preferably, maleic anhydride or derivatives thereof. In order to achieve the desired functionality as described above, the polymer can either be prepared from monomers that already contain the desired functional groups, or a polymer can be made that can be derivatized to produce the desired functionality.

An example of polymers that can be prepared from monomers that contain the desired functional groups is the subclass of copolymers of maleic anhydride and N-alkyl-N-vinylamides described above. These copolymers are most conveniently produced by copolymerization of an N-alkyl-N-vinylamide, such

as N-methyl-N-vinylacetamide or an N-vinyllactam, such as N-vinylpyrrolidone, with maleic anhydride. This produces directly the desired functionality, with an amide group or a lactam group, and with $R_3$ and $R_4$ together being oxygen to form an acid anhydride. In order to improve solubility, a salt of the polymer is usually prepared, in which case a portion or all of $R_3$ and $R_4$ would individually be a water soluble salt of a free acid.

One skilled in the art will recognize many other comonomers that can be copolymerized with maleic anhydride in similar fashion to produce the desired functionality. These comonomers that contain a desired functional group include but are not limited to vinyl esters, vinyl pyridine, vinyl lactams, vinyl esters, and derivatives of acrylate methacrylate esters where a desired functional group is contained in the alcohol portion of the ester.

An example of polymers that are derivatized to contain the desired functional groups is the subclass of half esters of maleic anhydride described above. These polymers are most conveniently produced by polymerizing maleic anhydride with another comonomer, followed by reacting the polymer thus formed with an alcohol containing the desired functional group, to form the maleate half ester. Examples of suitable alcohols would be polyols, lower alkyl poly(alkylene oxide), lower alkyl ethers of polyols or poly(alkylene oxides), alcohol amines, and many others. The inert comonomer is any comonomer that will not render the derivativized comonomer ineffective. Examples of other comonomers include, but are not limited to, ethylene, propylene, styrene, and acrylonitrile. One skilled in the art will recognize additional comonomers.

The polymers useful with the method of this invention, and polymers that can be converted into polymers that are useful with the method of this invention, can be prepared by known methods for preparing polymers of maleic anhydride with olefinically unsaturated comonomers. Free radical polymerization is preferred but cationic and anionic polymerization can also be used. It is also preferred that polymerization be conducted in a solvent to improve temperature control, handling of the reaction mass, etc. However, bulk polymerization and dispersion polymerization can also be used in appropriate circumstances. The polymer, or suitable salt thereof, must be water soluble, so polymerization and cross linking should not be allowed to proceed to the point where solubility is insufficient for effective scale inhibition.

The molecular weight of the inhibitor has been found to be important in determining activity. There exists for each polymer a critical minimum molecular weight, below which the polymer is ineffective. If the polymer has a molecular weight that is higher than the critical minimum molecular weight, there is little advantage to increasing molecular weight, further. Most polymers of this invention decrease somewhat in performance as molecular weight is increased beyond an optimum molecular weight range which is usually fairly close to the critical minimum molecular weight. As a result, polymerization must be controlled to produce a polymer of sufficient molecular weight to be above the critical minimum molecular weight. The critical minimum molecular weight and the optimum molecular weight range vary from polymer to polymer, and cannot be predicted. However, they can easily be determined for each polymer by routine experimentation.

Derivatization can also be carried out in the appropriate solvent for the derivatization reaction being run. The choice of solvent depends upon the type of derivatization being done.

The polymers of this invention are effective as threshold scale inhibitors. This means that the inhibitor is effective at inhibiting scale formation at substantially less than a stoichiometric ratio compared with the scale-forming cation. Typically, the mole ratio of precipitating cation to the inhibitor is on the order of 10:1 or 20:1 and is sometimes much greater. Threshold scale inhibition is well known in the water treatment field and is normally the route used to inhibit scale formation, rather than the stoichiometric sequestration of metal ions. The polymers of this invention have been found to be effective threshold scale inhibitors, particularly with respect to salts of polyvalent ions, more particularly with respect to alkaline earth metal salts, and most particularly with respect to calcium orthophosphate.

For the polymers of this invention to be considered to be effective, they must exhibit some scale inhibition in a system containing standard concentrations of the scale-forming ions at a concentration below 100 ppm of inhibitor. Standard conditions for measuring orthophosphate scale inhibition are 150 ppm of cation, such as calcium and 20 ppm of orthophosphate at pH 8.5. Standard conditions for measuring carbonate scale inhibition are stoichiometric amounts of a cation, such as calcium, and carbonate, at 1600 ppm of carbonate salt at pH 8.5. Standard conditions for measuring sulfate scale inhibition are stoichiometric amounts of a cation, such as calcium, and sulfate at 10,000 ppm of sulfate salt at pH 7. Preferably the polymer should exhibit at least 20% scale inhibition, and more preferably, at least 50% scale inhibition below 100 ppm. The best calcium phosphate scale inhibitor will exhibit greater than 90% scale inhibition at 30 ppm with the very best approaching 90% scale inhibition below 40 ppm. Although each of the polymers within the scope of this invention has some activity, it is not possible to predict which subclasses of polymers will be the very high performers and which will be more modest performers, but this can be determined by a fairly simple test using standard conditions set forth above.

Of course the amount of inhibitor necessary to most effectively inhibit scale formation depends upon the concentration of scale-forming ions in the system. As a general matter, the polymers of this invention have some effectiveness at inhibiting scale formation as low as 1 ppm, preferably 5 ppm, with use of greater than 10 ppm being more preferred. As a practical matter there is normally no advantage to be

gained from using more than 500 ppm of the polymer, and most applications require 200 ppm or less, and many applications require 100 ppm or less. Some very specialized applications, such as desalinization of sea water, can result in extremely high concentrations of dissolved solids which may require a concentration of inhibitor as high as 2000 ppm.

The method of this invention is effective at inhibiting formation of scale generally, particularly scale of multivalent cations, and multivalent anions. These multivalent cations include but are not limited to alkaline earth metals including but not limited to calcium, magnesium, strontium and barium. These multivalent ions include, but are not limited to phosphate, sulfate and carbonate. The method of this invention is particularly effective at inhibiting formation of calcium orthophosphate scale, although it is also effective against calcium salts of other phosphates such as condensed phosphates.

Without being bound by theory, it is believed that the polymer inhibits crystal growth at the very early stages of crystal formation. This can be achieved with maleic polymers as defined herein.

As is described above, one preferred class of polymers is copolymers of maleic anhydride with an N-alkyl-N-vinylamide of the following formula:

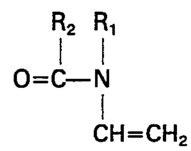

where $R_1$ and $R_2$ are alkyl, and may join together to form a lactam ring. It is preferred that the total number of carbon atoms in $R_1$ and $R_2$ total 20 or less, more preferably 11 or less, and most preferably 7 or less. Water soluble salts and hydrolysis products of these copolymers are also effective. Examples of the N-vinyl-N-alkylamides include but are not limited to N-methyl-N-vinylacetamide and other N-alkyl-N-vinylacetamides, N-vinylpyrrolidone, N-vinylpiperidone, N-vinylcaprolactam, N-vinyllaurolactam, and others. The alkyl groups and the amides may be either straight or branched chain and the lactam rings may optionally have side chains. $R_1$ and $R_2$ may also contain groups that do not render the polymer ineffective.

As is described above, a second preferred class of polymers is half esters of maleic ahydride polymers with the following repeating structural moiety:

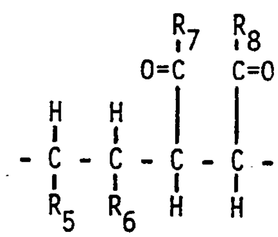

One of $R_7$ and $R_8$ is either a free acid or a water soluble salt of a free acid and the other is an ester of a polyol, a lower poly(alkylene oxide), a lower alkyl ether of a polyol or poly(alkylene oxide), or an alcohol amine. $R_5$ and $R_6$ are individually either hydrogen or a group that does not render the polymer ineffective.

Examples of polyols that are suitable include but are not limited to, ethylene glycol, propylene glycol, 1,3-propanediol, and the various butanediols, propanetriols, and butanetriols. To minimize cross linking during esterification, diols are preferred to higher alcohols. A diol with one primary and one secondary alcohol is preferred because the primary alcohol is free to react to form an ester, and the secondary alcohol is sterically hindered to some extent to minimize cross linking. As a result, propylene glycol is the preferred polyol.

Examples of poly(alkylene oxides) include, but are not limited to, diethylene glycol, triethylene glycol and other alcohols of the following formula:

$$H(OC_nH_{2n})_mOH$$

where n is an integer from 2 to 4 and m is an integer from 2 to 6.

Examples of lower alkyl ethers of polyols include but are not limited to ethylene glycol monomethyl ether, ethylene glycol monoethyl ether, 2-methoxy-1-propanol, 2-ethoxyethanol, and similar compounds. It is preferred that the lower alkyl ether group contains a $C_{1-4}$ alkyl substituent.

Examples of a lower alkyl ether of a poly(alkylene oxide) include, but are not limited to diethylene glycol methyl ether, diethylene glycol ethyl ether, triethylene glycol methyl ether, and similar compounds. It is preferred that the lower alkyl ether group contains a $C_{1-4}$ alkyl substituent.

Examples of alcohol amines include but are not limited to ethanolamine, 2-aminopropanol, 2-methylaminoethanol, and others.

The esterification reaction can be carried out in a conventional manner. Esterification catalysts may be

used, but normally are not needed. Esterification catalysts may in some instances be deterimental by promoting cross linking.

After esterification, the product can be used directly, if it is sufficiently water soluble, however water solubility can be increased by partial or complete neutralization of the free acid group, with an appropriate base, such as sodium, potassium or ammonium hydroxide, or other bases to form a water soluble salt.

The other monomer used to produce the initial maleic anhydride polymer can be any monomer that does not render the polymer ineffective. Because of its simplicity, ethylene is the preferred comonomer, however propylene, styrene, acrylonitrile, vinyl ether, vinyl ester, and vinyl halides are all appropriate comonomers. However, preparation of effective half esters of styrene/maleic anhydride copolymers have proven difficult, presumably because the steric effect of the bulky phenyl group inhibits esterification.

The polymer can contain, in addition to the repeating structural moiety described above, additional groups along the polymer chain. These additional groups can either be inert, or can impart to the copolymer useful properties, such as solubility, handling and processing ease, etc.

The following Examples illustrate this invention, and are not intended to in any way limit its scope. Unless indicated otherwise, as used herein, all percentages and parts are by weight and all temperatures are centigrade.

In each of the Examples, calcium phosphate scale inhibition was determined. A solution was prepared containing 150 ppm of calcium ions and 20 ppm of orthophospate ions. The indicated dose of inhibitor was added as the sodium salt and the pH was adjusted to 8.5. The samples were placed in a shaker bath at about 65°C. After 24 hours, the amount of phosphate remaining in solution was determined spectrophotometrically for each sample, as well as for a control in which no inhibitor was present. Calcium orthophosphate scale inhibition was calculated according to the following formula:

$$\% \text{ Inhib} = \frac{\text{ppm } PO_4 \text{ (sample)} - \text{ppm } PO_4 \text{ (control)}}{\text{ppm } PO_4 \text{ (initial)} - \text{ppm } PO_4 \text{ (control)}} \times 100$$

Example I

Copoly (N-methyl-N-vinylacetamide/maleic anhydride) was prepared as follows. About 5 g of maleic anhydride free of maleic acid was dissolved in about 32 g of tetrahydrofuran. This solution was placed in a flask fitted with a dropping funnel, mechanical stirrer and nitrogen inlet. The dropping funnel was charged with about 4 g of N-methylvinylacetamide dissolved in about 13 g of tetrahydrofuran and 0.25 ml of 90% t-butyl hydroperoxide. The temperature of the reaction was adjusted to about 30°C, and the N-methyl-N-vinylacetamide solution was added dropwise over a period of about 4 hours. About 0.5 ml of a 1 Molar solution of triethylborane in hexane was added to the reaction flask at the beginning of the reaction run, and every hour thereafter. At the end of about 7 hours reaction time, the product polymer was precipitated by addition of about 50 ml of petroleum ether. The slurry was filtered and washed with diethylether and dried.

Inhibition of calcium orthophosphate scale was determined as described above, and the results of the scale inhibition tests are shown in Table I.

TABLE I

| Conc. (ppm) | 10 | 20 | 30 | 40 | 50 | 75 | 100 |
|---|---|---|---|---|---|---|---|
| % Inhib | 7.8 | 12.5 | 85.4 | 99.4 | 97.5 | 97 | 98.3 |

Example II

Copoly(N-vinyl-2-pyrrolidone/maleic anhydride was prepared as follows. About 7.8 g of maleic anhydride was added to about 85 ml of dioxane in a flask equipped with a reflux condenser, mechanical stirrer, and nitrogen inlet. The flask and its contents were heated to about 80°C. About 7.06 g of N-vinyl-2-pyrrolidone and about 0.96 g azobisisobutyronitrile were dissolved in about 50 ml of dioxane. About 15 ml aliquots of the N-vinyl-2-pyrrolidone solution were added to the contents of the flask at 15 minute intervals, while maintaining the temperature of the flask at about 80°C. After addition was complete, the flask was held at about 80°C to provide for a total reaction time of 3 hours. The reaction mixture was cooled to room temperature, poured into about 250 ml of petroleum ether, to precipitate the polymer, and filtered. The solid product was dried, and inhibition of calcium orthophosphate scale was determined as described above. The results are reported in Table 2.

TABLE II

| Conc. (ppm) | 10 | 20 | 30 | 40 | 50 | 75 | 100 |
|---|---|---|---|---|---|---|---|
| % Inhib | 10.0 | 8.9 | 26.4 | 45.0 | 65.3 | 92.5 | 93.9 |

Example III

Copoly(N-vinyl-2-piperidone/maleic anhydride) was prepared according to the following procedure. About 5 g of maleic anhydride was dissolved in about 80 ml of ethylbenzene and filtered. The filtrate was added to a 3 neck flask fitted with a dropping funnel, mechanical stirrer, and nitrogen inlet. The dropping funnel was charged with about 5.1 g of N-vinyl-2-piperidone in about 40 ml of ethylbenzene and about 0.42 ml of 78% cumene hydroperoxide. The temperature was adjusted to about 30°C, and about 0.5 ml of 1 molar triethylborane in hexane was added to the reaction mixture at the beginning of the run and every hour thereafter. The N-vinyl-2-piperidone solution was added to the reaction mixture dropwise for about 4 hours, and the reaction mixture was stirred and maintained at about 30° for an additional 2 hours. The reaction mixture was cooled to room temperature, and was filtered to remove the solid polymeric product, which was then rinsed with ethylbenzene and 50 ml of petroleum ether and dried.

Inhibition of calcium orthophosphate scale for the copoly(N-vinyl-2-piperidone/maleic anhydride) produced above was determined as described above. The results are shown in Table 3.

TABLE 3

| Conc. (ppm) | 10 | 20 | 30 | 40 | 50 | 75 | 100 |
|---|---|---|---|---|---|---|---|
| % Inhib | 14.4 | 17.7 | 43.7 | 84.3 | 96.4 | 99.7 | 98.1 |

Example IV

Copoly(N-vinyl-ε-caprolactam/maleic anhydride) was prepared according to the following procedure. About 3 g of maleic anhydride was dissolved in about 48 ml of ethylbenzene and filtered. The filtrate was added to a 3 neck flask fitted with a mechanical stirrer, and a nitrogen inlet. About 3.52 g of N-vinyl-ε-caprolactam were dissolved in about 23.2 g of ethylbenzene and 0.49 ml of 78% cumene hydroperoxide. The temperature of the reaction mixture was adjusted to about 33°C and about 0.45 ml of 1 molar triethylborane in hexane was added at the beginning of the reaction run and every hour thereafter, and 3 ml aliquots of the N-vinyl-ε-caprolactam solution were added at the beginning of the run and every 30 minutes thereafter. Addition was complete after about 4 1/2 hours, and the reaction mixture was stirred and maintained at about 33°C for an additional 3 1/2 hours. The reaction mixture was cooled and filtered to recover the solid polymeric product which was rinsed with petroleum ether and dried.

Inhibition of calcium orthophosphate scale of the copoly(N-vinyl-ε-caprolactam/maleic anhydride) product produced above was deterined as described above. The results are set forth in Table 4.

TABLE 4

| Conc. (ppm) | 10 | 20 | 30 | 40 | 50 | 75 | 100 |
|---|---|---|---|---|---|---|---|
| % Inhib | 8.8 | 20.8 | 52.8 | 93.7 | 100 | 95 | 95.6 |

Example V

A quaterpolymer of N-vinyl-2-pyrrolidone, N-vinyl-2-piperidone, N-vinyl-ε-caprolactam and maleic anhydride was prepared according to the following procedure. About 10.7 g of maleic anhydride was dissolved in about 170 ml of ethylbenzene and filtered. The filtrate was added to a 3 neck flask fitted with a mechanical stirrer and a nitrogen inlet. About 1.71 g of N-vinyl-ε-caprolactam, about 7.01 g of N-vinyl-2-piperidone, and about 2.05 g of N-vinyl-2-pyrrolidone were dissolved in about 98 ml of ethylbenzene along with about 1.75 ml of 78% cumene hydroperoxide. The temperature of the reaction mixture was raised to about 33°C and maintained there. About 1.6 ml of 1 molar triethylborane in hexane was added at the beginning of the reaction and every hour thereafter, and 10 ml aliquots of the N-vinyllactam solution were added at the beginning of the reaction and every 30 minutes thereafter. Addition was complete after 4 hours and the reaction mixture was stirred and maintained at about 33°C for an additional 2 hours. The reaction mixture was cooled and filtered to recover the solid polymeric product which was rinsed with petroleum ether and dried.

Inhibition of calcium orthophosphate was determined as above. The results are reported in Table 5.

TABLE 5

| Conc. (ppm) | 10 | 20 | 30 | 40 | 50 | 75 | 100 |
|---|---|---|---|---|---|---|---|
| % Inhib. | 9.7 | 16.6 | 41.5 | 90.4 | 92.8 | 94.8 | 94.8 |

Example VI

This Example demonstrates that hydrolysis has little or no detrimental effect upon maleic anhydride/N-vinyllactams. About one gram of copoly(N-vinyl-2-pyrrolidone/maleic anhydride) was refluxed with a mixture of 24 g of water and 75 g of concentrated HCl, to effect acidic hydrolysis. Aliquots were withdrawn

at the indicated time and inhibition of calcium orthophosphate scale was determined as described above for each aliquot, using about 50 ppm of the polymer. A similar series of scale inhibition tests were run at pH 7.5. The results are reported in Table 6.

TABLE 6

| Time (hours) | % inhib pH 7.5 | % inhib pH 8.5 |
|---|---|---|
| 0 | 88.3 | 20.8 |
| 0.2 | 87.5 | 25.6 |
| 0.5 | — | 26.1 |
| 1.0 | — | 27.2 |
| 1.5 | — | 28.2 |
| 2.5 | 84.7 | 24.5 |
| 3.5 | 87.1 | 14.4 |
| 4.5 | 88.3 | 12.0 |
| 5.5 | 85.5 | 14.1 |
| 6.5 | 88.3 | 13.9 |
| 12 | 92.3 | 14.4 |
| 24 | 96.8 | — |

The copoly(N-vinyl-2-pyrrolidone) used above was higher molecular weight than optimum, as can be seen from the comparatively low % inhibition values. At pH 7.5, hydrolysis had virtually no effect on scale inhibition. At pH 8.5, there was some effect, but it was comparatively small.

Example VII

Low molecular weight (weight average molecular weight of about 1900) copolymer of ethylene and maleic anhydride was modified by heating with ethylene glycol at 100°C for 1.5 hours, to form an ethylene glycol half ester of the maleic anhydride group. Calcium orthophosphate scale inhibition was determined, as above, to be 33% of 50 ppm and 87.9% at 100 ppm.

Example VIII

Example VII was repeated, except that it was heated at 88°C for 1.2 hours. Calcium orthophosphate scale inhibition at 50 ppm was only 9.1%, but at 100 ppm inhibition was 93.5%. This indicates that the profile of activity with respect to concentration was quite different than the product of Example VII, but that it achieves a high enough level of activity so that this product is considered to be quite effective.

Example IX

Low molecular weight ethylene/maleic anhydride copolymer was heated at 89°C for 1 hour with diethylene glycol to form a diethylene glycol half ester of the maleic anhydride group. The calcium orthophosphate scale inhibition was found to be 93.7% at 50 ppm and 95.6% at 100 ppm.

Example X

Low molecular weight ethylene/maleic anhydride copolymer was heated with diethylene glycol monoethyl ether to form a diethylene glycol ethyl ether half ester of the maleic anhydride group. Calcium orthophosphate scale inhibition was determined to be 85.2% at 50 ppm and 91.0% at 100 ppm.

Example XI

Low molecular weight ethylene/maleic anhydride copolymer was heated with triethylene glycol at 100°C for 1.5 hours to form the triethylene glycol half ester of the maleic anhydride group. Calcium orthophosphate scale inhibition was determined to be 87.9% at 50 ppm and 92.9% at 100 ppm.

Example XII

Low molecular weight ethylene/maleic anhydride copolymer was reacted with ethanolamine to form the ethanolamine half ester of the maleic anhydride group. Calcium orthophosphate scale inhibition was determined to be 31.1% at 50 ppm and 79.4% at 100 ppm.

### Example XIII

Low molecular weight ethylene/maleic anhydride copolymer was heated with propylene glycol at 85°C for 1.5 hours, then neutralized with NaOH. Calcium orthophosphate scale inhibition was determined as above and the results are reported in Table 13, below.

TABLE 13

| Conc. (ppm) | 10 | 20 | 30 | 40 | 50 | 75 | 100 |
|---|---|---|---|---|---|---|---|
| % Inhib | 5 | 11.4 | 23.4 | 44.7 | 94.7 | 95 | 100 |

### Example XIV

Low molecular weight ethylene/maleic anhydride copolymer was heated with diethylene glycol monomethyl ether at 90C for 4 hours, to form a diethylene glycol monomethyl ether half ester of the maleic anhydride group. Calcium orthophosphate scale inhibition was determined, as above, and the results are shown in Table 14.

TABLE 14

| Conc. (ppm) | 10 | 20 | 30 | 40 | 50 |
|---|---|---|---|---|---|
| % Inhib. | 3.5 | 62 | 91 | 100 | 100 |

### Example XV

Low molecular weight ethylene/maleic anhydride copolymer was refluxed with methanol for 24 hours to form a methyl half ester of the maleic anhydride group. Calcium orthophosphate scale inhibition was determined as above and the results are reported in Table 15.

TABLE 15

| Conc. (ppm) | 20 | 30 | 40 | 50 | 100 |
|---|---|---|---|---|---|
| % Inhib. | 1.4 | 11.7 | 48.9 | 100 | 100 |

In general, activity of half esters of monohydroxyalcohols decreases with molecular weight of the alcohol, so that a half ester of ethanol would be expected to be less active than the half ester of methanol, etc.

**Claims**

1. A method for inhibiting the precipitation of calcium phosphate in an alkaline aqueous medium, comprising adding to said aqueous medium a water soluble maleate polymer comprising either the repeating structural moiety:

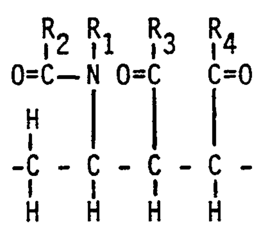

(moiety A)

(a) where $R_1$ and $R_2$ are the same or different and are alkyl groups or $R_1$ and $R_2$ join together to form a lactam ring, and (b) where $R_3$ and $R_4$ are individually such as to form with the adjacent carbonyl group a free acid or water soluble salt of a free acid, or $R_3$ and $R_4$ together are oxygen to form an acid anhydride; or the repeating structural moiety:

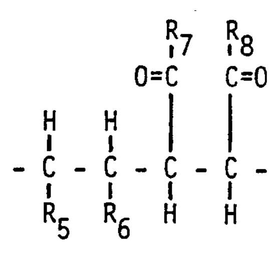

(moiety B)

(a) where one of $R_7$ and $R_8$ is such as to form with the adjacent carbonyl group either a free acid or a water soluble salt of a free acid, and the other of $R_7$ and $R_8$ is such as to form with the adjacent carbonyl group an ester of an alcohol selected from a polyol, a lower poly(alkylene oxide), a lower alkyl ether of a polyol or a poly(alkylene oxide), an alcohol amine, and methanol; and (b) where $R_5$ and $R_6$ are individually either H or a group that does not render the polymer ineffective for inhibiting the precipitation of calcium phosphate from aqueous media.

2. A method of Claim 1, wherein said calcium phosphate is calcium orthophosphate.

3. A method of either Claim 1 or Claim 2, wherein the amount of polymer added is from 5 ppm to 500 ppm.

4. A method of any of the preceding claims, wherein the polymer contains the repeating moiety A wherein the total number of carbon atoms of $R_1$ and $R_2$ is 20 or less.

5. A method of Claim 4, wherein the total number of carbon atoms of $R_1$ and $R_2$ is 11 or less.

6. A method of any of Claims 1 to 5, wherein the polymer contains the repeating moiety A wherein $R_1$ and $R_2$ join to form a lactam ring and total 4 to 6 carbon atoms.

7. A method of any of Claims 1 to 3, wherein said water soluble maleate polymer is a water soluble salt of copoly(N-vinyl-N-alkylacetamide/maleic anhydride).

8. A method of any of Claims 1 to 3, wherein said water soluble maleate polymer is a water soluble salt of copoly(N-vinylpyrrolidone/maleic anhydride).

9. A method of any of Claims 1 to 3, wherein said water soluble maleate polymer is a water soluble salt of copoly(N-vinylpiperidone/maleic anhydride).

10. A method of any of Claims 1 to 3, wherein said water soluble maleate polymer is a water soluble salt of copoly(N-vinylcaprolactam/maleic anhydride).

11. A method of any of Claims 1 to 3, wherein said water soluble maleate polymer is a water soluble salt of copoly(N-vinyllaurolactam/maleic anhydride).

12. A method of any of Claims 1 to 3, wherein the polymer contains the repeating moiety B wherein both $R_5$ and $R_6$ are H.

13. A method of any of Claims 1 to 3, wherein said water soluble maleate polymer is a water soluble salt of a half ester of copoly(ethylene/maleic anhydride) with an alcohol selected from methanol, ethylene glycol, propylene glycol, diethylene glycol, triethylene glycol, diethylene glycol, monomethyl ether, diethylene glycol monoethyl ether, and ethanolamine.

**Patentansprüche**

1. Verfahren zur Inhibierung der Ausfällung von Calciumphosphat aus einem alkalisch-wässrigen Medium, welches darin besteht, dem wässrigen Medium ein wasserlösliches Maleat-Polymer zuzusetzen, welches entweder den sich wiederholenden Strukturrest

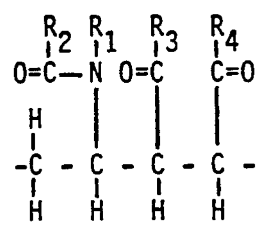

(Rest A)

in dem $R_1$ und $R_2$ gleichartig oder verschieden sind und Alkylgruppen darstellen oder $R_1$ und $R_2$ gemeinsam einen Lactamring bilden und $R_3$ und $R_4$ unabhängig sind und mit der benachbarten Carbonylgruppe eine freie Säure oder ein wasserlösliches Salz einer freien Säure bilden oder $R_3$ und $R_4$ gemeinsam Sauerstoff bedeuten unter Bildung eines Säureanhydrids; oder den sich wiederholenden Strukturrest:

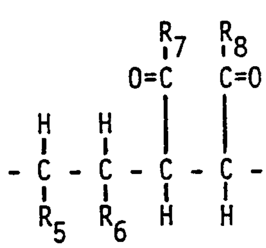

(Rest B)

umfaßt

(a) worin eine der Gruppen $R_7$ und $R_8$ zusammen mit der benachbarten Carbonylgruppe entweder eine freie Säure oder ein wasserlösliches Salz einer freien Säure bildet und die andere Gruppe der Gruppen $R_7$ und $R_8$ zusammen mit der benachbarten Carbonylgruppe einen Ester eines Alkohols ausgewählt aus Polyolen, niedrigmolekularen Poly-(alkylenoxiden), niedrigmolekularen Alkylether eines Polyols oder Poly-(alkylenoxids), Alkanolaminen oder Methanol, bildet; und

(b) worin $R_5$ und $R_6$ unabhängig voneinander entweder H oder eine Gruppe bedeuten, die das Polymer bezüglich der Inhibierung der Ausfällung von Calciumphosphat aus wässrigen Medien nicht unwirksam macht.

2. Verfahren nach Anspruch 1, worin das Calciumphosphat Calciumorthophosphat ist.

3. Verfahren nach entweder Anspruch 1 oder Anspruch 2, worin die Menge des zugesetzten Polymers 5 ppm bis 500 ppm beträgt.

4. Verfahren nach einem der vorhergehenden Ansprüche, worin das Polymer den sich wiederholdenden Rest A enthält, worin die Gesamtanzahl der Kohlenstoffatome von $R_1$ und $R_2$ 20 oder weniger beträgt.

5. Verfahren nach Anspruch 4, worin die Gesamtanzahl der Kohlenstoffatome von $R_1$ und $R_2$ 11 oder weniger beträgt.

6. Verfahren nach einem der Ansprüche 1 bis 5, worin das Polymer den sich wiederholdenden Rest A enthält, worin $R_1$ und $R_2$ unter Bildung eines Lactamringes verbunden sind und insgesamt 4 bis 6 Kohlenstoffatome aufweisen.

7. Verfahren nach einem der Ansprüche 1 bis 3, worin das wasserlösliche Maleat-Polymer ein wasserlösliches Salz eines Copoly(N-vinyl-N-alkylacetamid/Maleinsäureanhydrid) ist.

8. Verfahren nach einem der Ansprüche 1 bis 3, worin das wasserlösliche Maleat-Polymer ein wasserlösliches Salz von Copoly(N-vinylpyrrolidon/Maleinsäureanhydrid) ist.

9. Verfahren nach einem der Ansprüche 1 bis 3, worin das wasserlösliche Maleat-Polymer ein wasserlösliches Salz von Copoly(N-vinylpiperidon/Maleinsäureanhydrid) ist.

10. Verfahren nach einem der Ansprüche 1 bis 3, worin das wasserlösliche Maleat-Polymer ein wasserlösliches Salz von Copoly(N-vinylcaprolactam/Maleinsäureanhydrid) ist.

11. Verfahren nach einem der Ansprüche 1 bis 3, worin das wasserlösliche Maleat-Polymer ein wasserlösliches Salz von Copoly(N-vinyllaurolactam/Maleinsäureanhydrid) ist.

12. Verfahren nach einem der Ansprüche 1 bis 3, worin das Polymer den sich wiederholdenden Rest B enthält, in dem die beiden Gruppen $R_5$ und $R_6$ H bedeuten.

13. Verfahren nach einem der Ansprüche 1 bis 3, worin das wasserlösliche Maleat-Polymer ein wasserlösliches Salz eines Halbesters von Copoly-(ethylen/Maleinsäureanhydrid) mit einem aus Methanol, Ethylenglykol, Propylenglykol, Diethylenglykol, Triethylenglykol, Diethylenglykolmonomethylether, Diethylenglykolmonoethylether und Ethanolamin ausgewählten Alkohol ist.

**Revendications**

1. Procédé d'inhibition de la précipitation du phosphate de calcium dans un milieu aqueux alcalin, comprenant l'addition à ce phosphate de calcium aqueux d'un polymère de maléate soluble dans l'eau comprenant soit le motif structural:

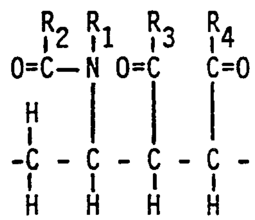

(partie A)

où $R_1$ et $R_2$ sont identiques ou différents et sont des groupes alkyle, ou bien $R_1$ et $R_2$ s'unissent pour former un cycle lactame, et où $R_3$ et $R_4$ sont individuellement tels qu'ils forment avec le groupe carbonyle adjacent un acide libre ou un sel soluble dans l'eau d'un acide libre, ou bien $R_3$ et $R_4$ sont ensemble l'oxygène pour former un anhydride d'acide; soit le motif structural:

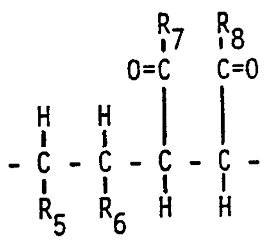

(partie B)

où un des symboles $R_7$ et $R_8$ est tel qu'il forme avec le groupe carbonyle adjacent soit un acide libre, soit un sel soluble dans l'eau d'un acide libre, et l'autre des symboles $R_7$ et $R_8$ est tel qu'il forme avec le groupe carbonyle adjacent un ester d'un alcool choisi parmi un polyol, un poly(oxyde d'alkylène)inférieur, un éther alkylique inférieur d'un polyol ou d'un poly(oxyde d'alkylène), une alcool amine et le méthanol; et (b) où $R_5$ et $R_6$ sont individuellement soit H, soit un groupe qui ne rend pas le polymère inefficace pour inhiber la précipitation du phosphate de calcium dans le milieu aqueux.

2. Procéde selon la revendication 1, dans lequel ce phosphate de calcium est l'orthophosphate de calcium.

3. Procédé selon l'une quelconque des revendications 1 ou 2, dans lequel la quantité de polymère ajoutée est de 5 ppm à 500 ppm.

4. Procédé selon l'une quelconque des revendications précédentes, dans lequel le polymère contient le motif A dans lequel le nombre total d'atomes de carbone de $R_1$ et $R_2$ est de 20 ou moins.

5. Procédé selon la revendication 4, dans lequel le nombre total d'atomes de carbone de $R_1$ et de $R_2$ est de 11 ou moins.

6. Procédé selon l'une quelconque des revendications 1 à 5, dans lequel le polymère contient le motif A dans lequel $R_1$ et $R_2$ s'unissent pour former un cycle lactame et totalisent 4 à 6 atomes de carbone.

7. Procédé selon l'une quelconque des revendications 1 à 3, dans lequel ce polymère de maléate soluble dans l'eau est un sel soluble dans l'eau d'un copoly(N-vinyl-N-alkylacétamide/anhydride maléique).

8. Procédé selon l'une quelconque des revendications 1 à 3, dans lequel ce polymère de maléate soluble dans l'eau est un sel soluble dans l'eau d'un copoly(N-vinylpyrrolidone/anhydride maléique).

9. Procédé selon l'une quelconque des revendications 1 à 3, dans lequel ce polymère de maléate soluble dans l'eau est un sel soluble dans l'eau de copoly(N-vinylpipéridone/anhydride maléique).

10. Procédé selon l'une quelconque des revendications 1 à 3, dans lequel ce polymère de maléate soluble dans l'eau est un sel soluble dans l'eau d'un copoly(N-vinylcaprolactame/anhydride maléique).

11. Procédé selon l'une quelconque des revendications 1 à 3, dans lequel ce polymère de maléate soluble dans l'eau est un sel soluble dans l'eau d'un copoly(N-vinyllaurolactame/anhydride maléique).

12. Procédé selon l'une quelconque des revendications 1 à 3, dans lequel le polymère contient le motif B où $R_5$ et $R_6$ sont H.

13. Procédé selon l'une quelconque des revendications 1 à 3, dans lequel ce polymère de maléate soluble dans l'eau est un sel soluble dans l'eau d'un hémi-ester d'un copoly(éthylène/anhydride maléique) avec un alcool choisi parmi le méthanol, l'éthylèneglycol, le propylèneglycol, le diéthylèneglycol, le triéthylèneglycol, l'éther monométhylique du diéthylèneglycol, l'éther monoéthylique du diéthylèneglycol et l'éthanolamine.